# EUROPÄISCHE PATENTSCHRIFT

(11) **EP 0 634 495 B1**
(45) Veröffentlichungstag und Bekanntmachung des Hinweises auf die Patenterteilung: **28.08.1996**
(21) Anmeldenummer: 94107328.0
(22) Anmeldetag: 11.05.1994
(51) Int. Cl.: C22C 5/06, C22C 5/08, B23K 35/28, B23K 35/30

(54) **Verwendung einer kadmiumfreien Silberlegierung als niedrig schmelzendes Hartlot**
Use of a cadmium free silver alloy as a low metting point solder
Utilisation d'alliages à base d'argent pour matériaux de brassage exempt de cadmium

(30) Priorität: 12.07.1993 DE 4323227
(43) Veröffentlichungstag der Anmeldung: 18.01.1995
(73) Patentinhaber: Degussa Aktiengesellschaft, D-60311 Frankfurt (DE)
(72) Erfinder: Weise, Wolfgang, Dr. Dipl.-Ing., D-60318 Frankfurt (DE); Malikowski, Willi, D-63739 Aschaffenburg (DE); Kaufmann, Dieter, Dipl.-Ing., D-63633 Birstein (DE); Krappitz, Harald, Dr. Dipl.-Ing., D-63457 Hanau 9 (DE)

(56) Entgegenhaltungen:
- DE-A- 2 417 060
- DE-A- 2 745 409
- DE-A- 3 315 498
- DE-A- 4 209 291
- DATABASE WPI Week 7652, Derwent Publications Ltd., London, GB; AN 76-96885X & JP-A-51 128 664 (TANAKA KIKINZOKU) 10. November 1976

## Beschreibung

Die Erfindung betrifft die Verwendung einer kadmiumfreien Silberlegierung als niedrigschmelzendes Hartlot mit einer Arbeitstemperatur von kleiner als 630^{o} C, insbesondere als Universallot für das Löten mit Flußmitteln an der Luft.

Hartlote sind zum Löten geeignete Metallegierungen mit Arbeitstemperaturen von größer als 450^{o} C. Sie bestehen oft aus Silber mit Zusätzen von Kupfer, Zink und Kadmium.

Bis heute sind allerdings keine praktisch verwendbaren Universallote für den Einsatz mit Flußmitteln oder unter Vakuum bzw. Schutzgas bekannt, deren Arbeitstemperatur unterhalb 600^{o} C liegt. Je geringer jedoch die Arbeitstemperatur ist, in desto geringerem Ausmaß werden beim Lötvorgang durch das Erwärmen auf Löttemperatur die mechanischen Eigenschaften der zu verbindenden Werkstücke beeinträchtigt. Neben der Beeinflussung der Festigkeit, insbesondere von vergüteten Stählen, bleiben auch die thermischen Spannungen umso geringer, je niedriger die Arbeitstemperatur der Hartlote liegt. Gleichzeitig wird auch der Energiebedarf verringert. Es ist also wichtig, Hartlote mit möglichst niedrigen Arbeitstemperaturen zur Verfügung zu haben.

Hartlote mit Arbeitstemperaturen zwischen 600 und 700^{o} C bestehen überwiegend aus Legierungen der Metalle Silber, Kupfer, Zinn, Zink und Kadmium. Es ist aber bekannt, daß Kadmium und seine leicht flüchtigen Oxide toxisch wirken können, wenn sie vom menschlichen Körper aufgenommen werden. Diese Inkorporation läßt sich bei nicht sachgemäßem Löten mit kadmiumhaltigen Loten nicht immer vollständig ausschalten, so daß die Gefahr von Vergiftungserscheinungen bestehen kann. Dadurch stellt sich die Forderung, den Kadmiumgehalt in Hartloten stark zu verringern oder wo es technisch möglich ist, ganz zu vermeiden. Dies ist zudem aus allgemein ökologischen Gründen sehr erstrebenswert.

Bei den meisten der bisher verwendeten Hartlotlegierungen mit Arbeitstemperaturen zwischen 600 und 700^{o} C ist zur Erzielung dieser niedrigen Temperaturen ein mehr oder weniger hoher Kadmiumgehalt notwendig. Das bisher verwendete niedrigschmelzendste kadmiumhaltige Lot hat die Zusammensetzung Ag 44, Cu 19, Zn 21, Cd 20. es besitzt eine Arbeitstemperatur von 610^{o} C. Es führt zudem zu hervorragenden mechanischen Eigenschaften der entstehenden Lötverbindung. Die Lötverbindung ist hochfest und sehr duktil. Die Duktilität wird häufig durch sogenannte Biegewinkel angegeben, die an stumpf gelöteten Verbindungen gemessen werden.

Kadmiumfreie Lotlegierungen existieren seit längerer Zeit und werden auch immer häufiger angewendet. Die bisher bekannten kadmiumfreien Hartlote bestehen üblicherweise aus Silber, Kupfer, Zink und Zinn. Die Arbeitstemperaturen dieser Lote liegen jedoch um 80 bis 120^{o} C über denen der entsprechenden kadmiumhaltigen Loten, was bei temperaturempfindlichen Werkstoffen nicht tragbar ist, so daß auch heute noch in vielen Fällen kadmiumhaltige Lote erforderlich sind. Das am niedrigsten schmelzende kadmiumfreie Hartlot hat die Zusammensetzung Ag 56, Cu 22, Zn 17, Sn 5 mit einer Arbeitstemperatur von 665^{o} C. Lötverbindungen mit diesem Lot zeigen zwar hervorragende Festigkeiten und Duktilitäten, dennoch werden insbesondere die Duktilitätseigenschaften, d.h. die Biegewinkel von Lötverbindungen mit kadmiumhaltigen Hartloten nicht erreicht. Es existieren zwar auch Hartlote, die die Duktilität von mit kadmiumhaltigen Loten hergestellten Lötverbindungen erreichen, diese Lote besitzen dann aber eine noch höhere Arbeitstemperatur von über 700^{o}C.

Aus der DE-AS 24 17 060 ist eine kadmiumfreie Hartlotlegierung auf Silberbasis bekannt, die 40 bis 50 Gew.% Silber, 15 bis 38 Gew.% Kupfer, 22 bis 32 Gew.% Zink, 1 bis 6 Gew.% Zinn und 0,5 bis 3 Gew.% Indium enthält. Die Arbeitstemperaturen dieser Hartlote liegen zwischen 710 und 630^{o} C, was für viele Anwendungen noch zu hoch ist. Außerdem erreichen diese Legierungen nicht die geforderte Duktilität der Lötverbindung.

Die DE-OS 33 15 498 beschreibt Schichtverbundkontaktstücke für Schwachstromkontakte, bei denen die Lotschicht aus einer Silber-Kupfer-Gallium-Legierung besteht. Sie enthält 60 bis 75 Gew.% Silber, 18 bis 35 Gew.% Kupfer und 5 bis 8 Gew.% Gallium, wobei die letztere Komponente auch durch 4 bis 7 Gew.% Gallium plus 1 bis 4 Gew.% Indium, oder durch 1 bis 4 Gew.% Gallium und 3 bis 7 Gew.% Zinn ersezt werden kann. Schmelzpunkte werden für diese Lote nicht angegeben. Sie liegen jedoch oberhalb 650^{o} C.

Aus der SU-PS 450 673 (Derwent Abstr. 75-65066W7/39) sind Lote mit 50 bis 65 Gew.% Silber, 5 bis 41 Gew.% Kupfer, 3 bis 12 Gew.% Gallium und 6 bis 18 Gew.% Indium bekannt. Ihre Schmelzpunkte liegen bei 640 bis 680^{o} C. Die Legierungen sind außerdem sehr spröde.

Die DE-OS 27 45 409 beschreibt Hartlotlegierungen mit 50 bis 70 Gew.% Silber, 15 bis 30 Gew.% Kupfer, 8 bis 20 Gew.% Zink und 0,1 bis 8 Gew.% Gew.% Gallium und/oder Indium. Ihre Schmelzpunkte liegen zwischen 650 und 680^{o} C und damit zum Teil deutlich über denen von kadmiumhaltigen Legierungen.

Durch Erhöhung des Ga-Gehaltes lassen sich die Schmelzpunkte dieser Legierungen noch weiter herabsetzen. Allerdings sind Silber-Kupfer-Legierungen mit den üblichen Gehalten an Zink, Zinn und/oder Indium, die mehr als 8 Gew.% Gallium enthalten, nur schwer verformbar und können daher nicht mehr zu Halbzeug verarbeitet werden. Sie erfüllen damit auch nicht die Forderungen nach einer duktilen Lötverbindung.

Es war daher Aufgabe der vorliegenden Erfindung, eine kadmiumfreie Hartlotlegierung auf Silberbasis zu entwickeln, die eine möglichst niedrige Arbeitstemperatur von weniger als 630^{o} C besitzt, leicht umformbar ist, zu duktilen, den kadmiumhaltigen Loten vergleichbaren Duktilitäten der Lötverbindungen führt und universell einsetzbar ist.

Diese Aufgabe wird erfindungsgemäß gelöst durch die Verwendung einer Legierung mit 30 bis 80 Gew.% Silber, 10 bis 36 Gew.% Kupfer, 15 bis 32 Gew.% Zink, 0,5 bis 7 Gew.% Gallium, 0,5 bis 7 Gew.% Zinn und 0 bis 5 Gew.% Indium.

Vorzugsweise verwendet man Legierungen mit 50 bis 60 Gew.% Silber, 15 bis 25 Gew`% Kupfer, 15 bis 25 Gew.% Zink, 0,5 bis 5 Gew.% Gallium, 0,5 bis 5 Gew.% Zinn und 0 bis 5 Gew.% Indium, wobei der Gallium- und Zinngehalt zusammen mindestens 2 Gew.% betragen muß.

Bewährt haben sich Legierungen mit 52 bis 58 Gew.% Silber, 15 bis 22 Gew.% Kupfer, 16 bis 23 Gew.% Zink, 0,5 bis 4 Gew.% Gallium, 0,5 bis 5 Gew.% Zinn und 0 bis 5 Gew.% Indium, wobei der Gallium- und Zinngehalt zusammen mehr als 5 Gew.%, insbesondere mehr als 7 Gew.% betragen muß.

Besonders bewährt hat sich eine Legierung mit 56 Gew.% Silber, 19 Gew.% Kupfer, 17 Gew.% Zink, 5 Gew.% Zinn und 3 Gew.% Gallium.

Diese Legierungen besitzen Arbeitstemperaturen von kleiner als 630^{o} C und weisen überraschenderweise Biegewinkel der Lötverbindungen auf, die gleich oder sogar besser als die von mit kadmiumhaltigen Loten gelöteten Verbindungen sind. Es hat sich gezeigt, daß durch Zulegierungen von Gallium zu Silber-Kupfer-Zink-Zinn-Legierungen die Liqudustemperatur nochmal deutlich gesenkt werden kann, ohne die Duktilität zu verschlechtern, obwohl ein Galliumzusatz im Normalfall bei Legierungen eine Versprödung bewirkt. Die galliumhaltigen Fünfstofflegierungen aus Ag, Cu, Zn, Sn ergeben überraschenderweise höhere oder zumindest gleich große Biegewinkel wie die bisher verwendeten AgCuZnSn-Legierungen, die ohne Gallium deutlich höhere Arbeitstemperaturen aufweisen. Damit wurde eine Lotlegierung geschaffen, die die Eigenschaften der in der Praxis verwendeten kadmiumhaltigen Lotlegierungen besitzt, jedoch ohne irgenwelche toxischen Zusätze auskommt.

Die Tabelle zeigt einige erfindungsgemäßen Lotlegierungen mit ihren Arbeitstemperaturen und dem an Messingteilen gemessenen Biegewinkel.

**Tabelle**

| | Ag | Cu | Zn | Sn | Ga | In | T_{A} | Biegewinkel |
|---|---|---|---|---|---|---|---|---|
| 1 | 56 | 19 | 17 | 5 | 3 | 0 | 610°C | 60^{o} |
| 2 | 56 | 19 | 17 | 6 | 2 | 0 | 605°C | 60^{o} |
| 3 | 55 | 15 | 22 | 2 | 6 | 0 | 610°C | 55^{o} |
| 4 | 63 | 15 | 15 | 2 | 5 | 0 | 615°C | 58^{o} |
| 5 | 63 | 15 | 15 | 5 | 2 | 0 | 620°C | 52^{o} |
| 6 | 60 | 15 | 17 | 1 | 5 | 2 | 610°C | 56^{o} |

## Patentansprüche

1. Verwendung einer kadmiumfreien Silberlegierung mit 30 bis 80 Gew.% Silber, 10 bis 36 Gew.% Kupfer, 15 bis 32 Gew.% Zink, 0,5 bis 7 Gew.% Gallium, 0,5 bis 7 Gew.% Zinn und 0 bis 5 Gew.% Indium als niedrig schmelzendes Hartlot mit einer Arbeitstemperatur von kleiner als 630^{o} C.

2. Verwendung einer kadmiumfreien Silberlegierung mit 50 bis 60 Gew.% Silber, 15 bis 25 Gew.% Kupfer, 15 bis 25 Gew.% Zink, 0,5 bis 5 Gew.% Gallium, 0,5 bis5 Gew.% Zinn und 0 bis 5 Gew.% Indium gemäß Anspruch 1, wobei der Gallium- und Zinngehalt zusammen mindestens 2 Gew.% betragen muß.

3. Verwendung einer kadmiumfreien Silberlegierung mit 52 bis 58 Gew.% Silber, 15 bis 22 Gew.% Kupfer, 16 bis 23 Gew.% Zink, 0,5 bis 4 Gew.% Gallium, 0,5 bis 5 Gew.% Zinn und 0 bis 5 Gew.% Indium gemäß Anspruch 1, wobei der Gallium- und Zinngehalt zusammen mindestens 5 Gew.% betragen muß.

4. Verwendung einer kadmiumfreien Silberlegierung mit 52 bis 58 Gew.% Silber, 15 bis 22 Gew.% Kupfer, 16 bis 23 Gew.% Zink, 0,5 bis 4 Gew.% Gallium, 0,5 bis 5 Gew.% Zinn und 0 bis 5 Gew.% Indium gemaß Anspruch 1 , wobei der Gallium- und Zinngehalt zusammen mindestens 5 Gew.% betragen muß.

5. Verwendung einer kadmiumfreien Silberlegierung gemäß Anspruch 3, wobei der Gallium- und Zinngehalt zusammen mindestens 7 Gew.% betragen muß.

6. Verwendung einer kadmiumfreien Silberlegierung mit 56 Gew.% Silber, 19 Gew.% Kupfer, 17 Gew.% Zink, 5 Gew.% Sn und 3 Gew.% Gallium gemäß Anspruch 1.

## Claims

1. The use of a cadmium-free silver alloy having 30 to 80% by weight of silver, 10 to 36% by weight of copper, 15 to 32% by weight of zinc, 0.5 to 7% by weight of gallium, 0.5 to 7% by weight of tin and 0 to 5% by weight of indium as a low-melting hard solder having a working temperature of less than 630°C.

2. The use of a cadmium-free silver alloy having 50 to 60% by weight of silver, 15 to 25% by weight of copper, 15 to 25% by weight of zinc, 0.5 to 5% by weight of gallium, 0.5 to 5% by weight of tin and 0 to 5% by weight of indium according to claim 1, wherein the content of gallium and tin together must amount to at least 2% by weight.

3. The use of a cadmium-free silver alloy having 52 to 58% by weight of silver, 15 to 22% by weight of copper, 16 to 23% by weight of zinc, 0.5 to 4% by weight of gallium, 0.5 to 5% by weight of tin and 0 to 5% by weight of indium according to claim 1, wherein the content of gallium and tin together must amount to at least 5% by weight.

4. The use of a cadmium-free silver alloy having 52 to 58% by weight of silver, 15 to 22% by weight of copper, 16 to 23% by weight of zinc, 0.5 to 4% by weight of gallium, 0.5 to 5% by weight of tin and 0 to 5% by weight of indium according to claim 1, wherein the content of gallium and tin together must amount to at least 5% by weight.

5. The use of a cadmium-free silver alloy according to claim 3, wherein the content of gallium and tin together must amount to at least 7% by weight.

6. The use of a cadmium-free silver alloy having 56% by weight of silver, 19% by weight of copper, 17% by weight of zinc, 5% by weight of tin and 3% by weight of gallium according to claim 1.

## Revendications

1. Utilisation d'un alliage d'argent dépourvu de cadmium ayant de 30 à 80 % en poids d'argent, de 10 à 36 % en poids de cuivre, de 15 à 32 % en poids de zinc, de 0,5 à 7 % en poids de gallium, de 0,5 à 7 % en poids d'étain, et de 0 à 5 % en poids d'indium en tant que brasage fort à bas point de fusion avec une température de travail inférieure à 630°C.

2. Utilisation d'un alliage d'argent dépourvu de cadmium, ayant de 50 à 60 % en poids d'argent, de 15 à 25 % en poids de cuivre, de 15 à 25 % en poids en zinc, de 0,5 à 5 % en poids de gallium, de 0,5 à 5 % en poids d'étain, et de 0 à 5 % en poids d'indium, selon la revendication 1, dans lequel la teneur en gallium et en étain conjointement doit s'élever à au moins 2 % en poids.

3. Utilisation d'un alliage d'argent dépourvu de cadmium ayant de 52 à 58 % en poids d'argent, de 15 à 22 % en poids de cuivre, de 16 à 23 % en poids de zinc, de 0,5 à 4 % en poids de gallium, de 0,5 à 5 % en poids d'étain et de 0 à 5 % en poids d'indium selon la revendication 1 dans lequel la teneur en gallium et en étain conjointement doit s'élever à au moins 5 % en poids.

4. Utilisation d'un alliage d'argent dépourvu de cadmium, ayant de 52 à 58 % en poids d'argent, de 15 à 22 % en poids de cuivre, de 16 à 23 % en poids de zinc, de 0,5 à 4 % en poids de gallium, de 0,5 à 5 % en poids d'étain et de 0 à 5 % en poids d'indium, selon la revendication 1, dans lequel la teneur en gallium et en étain conjointement, doit s'élever à au moins 5 % en poids.

5. Utilisation d'un alliage d'argent dépourvu de cadmium selon la revendication 3, dans lequel la teneur en gallium et en étain conjointement doit s'élever au moins à 7 % en poids.

6. Utilisation d'un alliage d'argent dépourvu de cadmium ayant 56 % en poids d'argent, 19 % en poids de cuivre, 17 % en poids de zinc, 5 % en poids d'étain et 3 % en poids de gallium selon la revendication 1.
